# EUROPÄISCHE PATENTSCHRIFT

(11) **EP 2 295 214 B1**
(45) Veröffentlichungstag und Bekanntmachung des Hinweises auf die Patenterteilung: **24.07.2013**
(21) Anmeldenummer: 10008978.8
(22) Anmeldetag: 30.08.2010
(51) Int. Cl.: B27M 1/08, B23Q 7/00

(54) **Vorrichtung zur Bearbeitung von Werkstücken**
Device for processing workpieces
Dispositif destiné au traitement de pièces à usiner

(30) Priorität: 12.09.2009 DE 102009041398
(43) Veröffentlichungstag der Anmeldung: 16.03.2011
(73) Patentinhaber: IMA Klessmann GmbH Holzbearbeitungssysteme, 32312 Lübbecke (DE)
(72) Erfinder: Hampel, Thomas, 32312 Lübbecke (DE); Hucke, Helmut, 32312 Lübbecke (DE)
(74) Vertreter: Schober, Mirko

(56) Entgegenhaltungen:
- EP-A1- 0 335 464
- DE-A1- 2 234 868

## Beschreibung

Die Erfindung betrifft eine Vorrichtung zur Bearbeitung von Werkstücken nach dem Oberbegriff des Anspruchs 1.

Entsprechende Vorrichtungen werden zum Bearbeiten von plattenförmigen Werkstücken, insbesondere bei der kommissionsweisen Fertigung von Möbelteilen, eingesetzt. Maschinen für die kommissionsweise Fertigung sind bekannt, diese weisen eine große Baulänge auf, weil je nach zu bearbeitender Teilegröße unterschiedliche nacheinander durchzuführende Bearbeitungsschritte durchzuführen sind. Folglich wird ein aufwendiges Transportsystem für die unterschiedlichen Teilegrößen verlangt. Je nach vorhandenem Platz müssen die Werktücke nach Durchlaufen einer entsprechenden Vorrichtung zur weiteren Bearbeitung in eine andere Vorrichtung übernommen und neu aufgespannt werden.

Aus EP 0 335 464 A1 ist eine Vorrichtung gemäß dem Oberbegriff des Anspruchs 1 bekannt. Diese sieht eine erste Bearbeitungsebene vor, in der ein Bearbeitungsaggregat wirkt, sowie eine zweite, untere Ebene, in welcher die Werkstücke zurückgeführt werden. Um etwa eine weitere Bearbeitung in der ersten Bearbeitungsebene durchführen zu können, muss das Werkstück in der zweiten Ebene zurückgeführt und wieder in die erste Ebene verbracht werden. Die Rückführungszeit verlängert die Bearbeitungszeit pro Werkstück. Dies ist nachteilig.

Der Erfindung liegt daher die Aufgabe zugrunde, eine Vorrichtung der eingangs genannten Art anzugeben, bei der diese Nachteile nicht auftreten.

Gelöst wird diese Aufgabe mit den Merkmalen des Anspruchs 1. Vorteilhafte Ausführungsformen finden sich in den Unteransprüchen.

Die erfindungsgemäße Vorrichtung weist gemäß einer Ausführungsform wenigstens zwei Transportebenen auf, in denen die Werkstücke in die jeweiligen Transportrichtungen befördert werden können. Bevorzugt verlaufen die Transportrichtungen entgegengesetzt. Dies schafft Raum für zusätzliche Bearbeitungsschritte, ohne dass sich die Baulänge der Vorrichtung verändert. Bevorzugt werden die Werkstücke hierbei über Fixiereinrichtungen mit Vakuumspannsystem gehalten, die als verschiebliche oder bewegliche Laufwagen ausgebildet sein können und bevorzugt jeweils mit einem Linearantrieb versehen sind. Die so fixierten Werkstücke können so in wenigstens zwei Ebenen durch die Maschine transportiert und bearbeitet werden. Wird ein Vakuumspannsystem verwendet, so liegt die Werkstückoberseite frei, so dass mit der Erfindung insbesondere auch eine Freiformplattenbearbeitung mit einer Bekantung und einer entsprechenden Nachbearbeitung erfolgen kann.

Eine andere Ausführungsform sieht vor, dass innerhalb einer Transportebene die Fixiereinrichtungen in wenigstens einer weiteren Transportrichtung beweglich sind. Eine zweite Transportebene ist nicht notwendig. Die Vorrichtung kann dabei so ausgestaltet sein, dass die weitere Transportrichtung zur ersten Transportrichtung entgegengesetzt verläuft, jedoch sind auch andere Richtungen möglich, wie z.B. eine bogenförmige Bahn. So ist auch bei dieser Ausführungsform der zyklische Betrieb möglich.

Die Erfindung wird nachfolgend anhand der Figuren 1 bis 3 schematisch näher erläutert.

Figur 1 zeigt eine Draufsicht auf eine erfindungsgemäße Vorrichtung.

Figur 2 zeigt eine Längsschnittansicht entlang der Linie A-B der in Figur 1 dargestellten Vorrichtung.

Figur 3 zeigt eine Querschnittansicht entlang der Linie C-D der in Figur 1 gezeigten Vorrichtung.

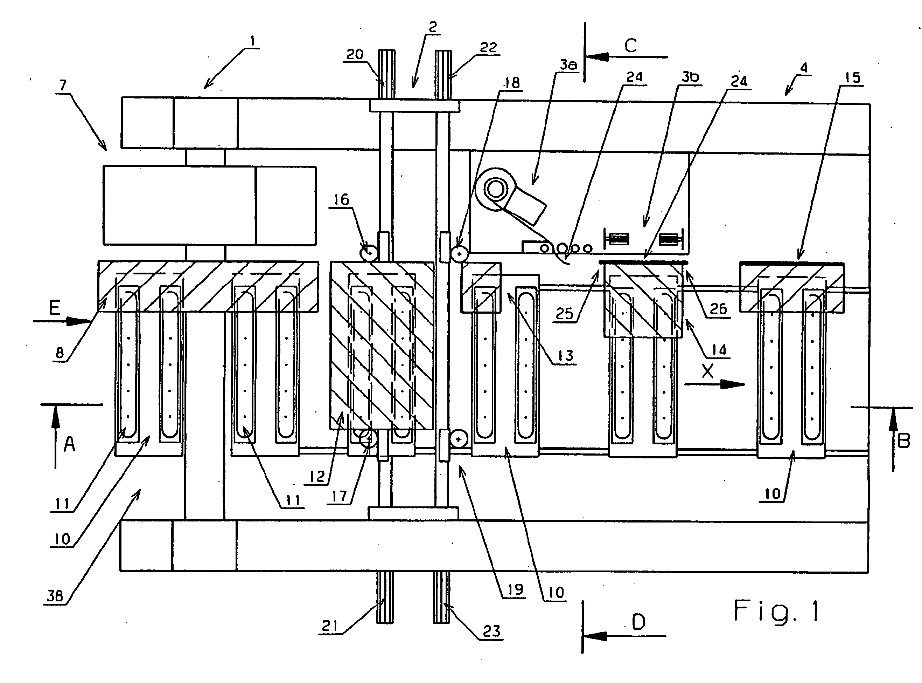

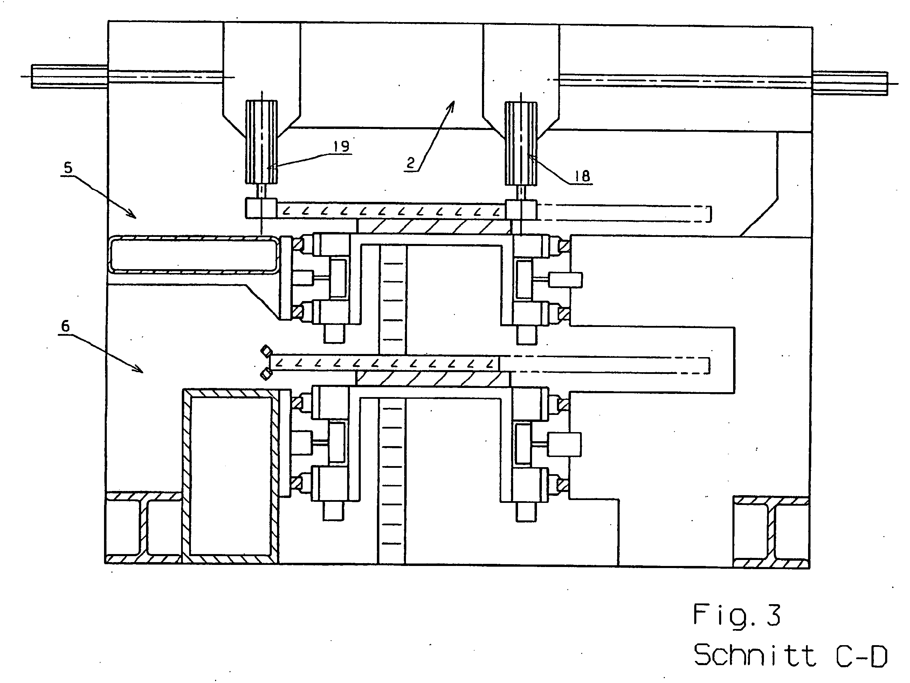

Die in Figur 1 und Figur 3 dargestellte Vorrichtung ist mit einer Beschickungsstation 1 zum Einbringen der zu bearbeitenden Werkstücke, einer Portalfrässtation 2, einer Beleimstation 3a zur Beleimung des Werkstücks 8 und einer Kappstation 3b versehen. Im gezeigten Beispiel befindet sich am Ende der Vorrichtung eine Absenk- oder Anhebestation 4, um die Werkstücke 8 aus einer ersten Bearbeitungsebene 5 in eine weitere zweite Bearbeitungsebene 6 zu überführen.

Im Betrieb der Maschine wird ein Werkstück 8 von einem Werkstückstapelplatz 7 mittels einer Saugtraverse 9 aufgenommen und auf einem oder mehreren Laufwagen 10 aufgelegt und durch an den Laufwagen 10 befindliche Saugspanner 11 fixiert. Mit den linear angetriebenen Laufwagen 10 können somit unterschiedliche Werkstückformate 12, 13, 14, 15 in Transportrichtung X durch die Maschine geführt werden. Zunächst erfolgt dabei in der Portalstation 2 und den Fräsaggregaten 16, 17 und 18, 19, welche über die Positionierantriebe 20, 21 und 22, 23 positioniert werden können, ein paralleler Fügeschnitt an den parallel zur Laufrichtung X liegenden Werkstückseiten. In der Beleimstation 3a wird ein Kantenband 24 an die Schmalseite der Werkstücke 13 einseitig angeleimt. Mit der Kappstation 3b werden die überstehenden Enden 25, 26 an der Werkstückvorder- und hinterkante bündig gekappt.

Hinter dieser Beleim- und Kappstation 3a, 3b in der ersten Bearbeitungsebene 5 werden die Werkstücke an der Absenkstation 4 in die zweite Ebene 6 abgesenkt. Entsprechend können die Werkstücke auch angehoben werden, um sie in eine höher liegende Bearbeitungsebene (nicht gezeigt) zu überführen. Es ist auch möglich, das Absenken- oder Anheben, also das Überführen des Laufwagens bzw. Werkstücks aus einer Transportebene 5 in eine andere Trans-portebene an jeder Stelle des Verfahrweges zu ermöglichen. Im gezeigten Beispiel ist dies jedoch lediglich an der Absenksta-tion 4 vorgesehen.

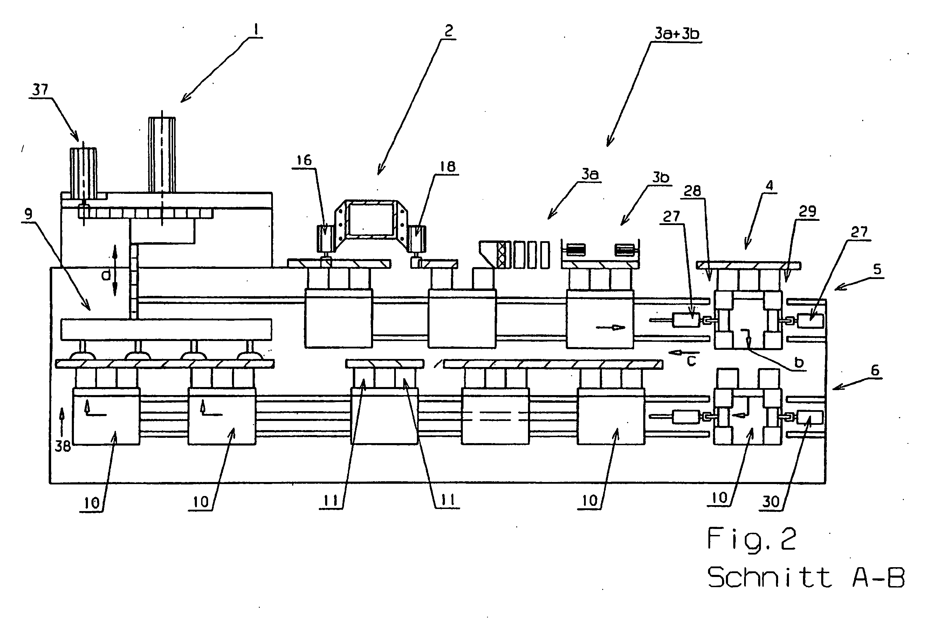

Dies ist in Figur 2 näher dargestellt. Über ein Auskopplungssystem 27 wird der Laufwagen 10 über die geteilten Führungen 28, 29 und den Weg b in die zweite Ebene 6 überführt. Dort werden die Laufwagen 10 im gezeigten Beispiel ebenfalls in zur Laufrichtung der Laufwagen 10 in der oberen Ebene 5 entgegengesetzten Richtung c bewegt. Bevorzugt ist auch hierzu ein Linearantrieb vorgesehen, mit dem der Laufwagen über ein Kopplungssystem 30 gekoppelt ist. Dieses lässt sich bei der Überführung von einer Ebene 5 in eine andere Ebene 6 umkehren, so dass die Laufrichtung verändert werden kann. Durch den Umkehrschluss des Kopplungssystems 30 des kompletten Laufwagens werden somit die Werkstücke über den Weg c durch die zweite Ebene geführt, welche als Nachbearbeitungsstation ausgebildet sein kann. Dort können z.B. die überstehenden Randbereiche der Werkstücke in den entsprechenden (auch mehrmaligen) Durchläufen nachbearbeitet werden. Für die genannten Durchläufe werden die Werkstücke über die Beschickungsstation 1 im in Figur 2 vorderen Bereich der Maschine wieder aufgenommen und entlang des Weges d verfahren, so dass sie wieder in die erste Ebene 5 gehoben werden. Gleichzeitig werden die Werkstücke über den Positionierantrieb 37 der Saugtraverse 9 jeweils um 90° gedreht und auf den Laufwagen 10 für einen erneuten Durchlauf positioniert. Es ist auch möglich, die Saugspannerauflage, auf der die Werkstücke liegen, drehbar auszuführen. Dadurch kann die Drehung des Werkstücks ohne Abheben vom Laufwagen - also insbesondere in jedem Bereich der Maschine - erfolgen.

Durch das entsprechende Ein- und Auskoppeln der Laufwagen 10 kann somit die Werkstückfolge für die weiteren Durchläufe festgelegt werden. Nach dem letzten Durchlauf werden die Werkstücke mit Hilfe der Beschickungsstation 1 auf einem Ablegeplatz 38 abgelegt.

In beiden Ebenen 5, 6 können unterschiedliche Bearbeitungsschritte erfolgen. Wenigstens eine der Ebenen 5, 6, weist hierzu ein Bearbeitungsaggregat auf. Eine der Ebenen 5, 6, kann ohne Bearbeitungsaggregat ausgestattet sein, z.B. um Laufwege für die Werkstücke, etwa zur Trocknung, bereitzustellen. Bevorzugt ist jedoch, dass in beiden Ebenen Bearbeitungsschritte ausgeführt werden.

Die Erfindung ist auch für das Bearbeiten von Freiformen geeignet. Hierzu wird das Werkstück auf einem Laufwagen 10 positioniert und in den Bereich der Portalfrässtation 2 transportiert, wo über die interpolierende Bewegung des Fräsaggregates 16 in einer Richtung Y quer zur Laufrichtung X der Laufwagen 10 mit der X-Bewegung des Laufwagens 10 eine Freiformplatte aus einem Werkstück gefräst werden wird.

Im Anschluss daran kann über ein an sich bekanntes Konturenverleimteil etwa ein Kantenband an die Schmalfläche des Werkstücks angebracht werden. Für die Nachbearbeitung der überstehenden Kantenränder können Werkzeuge aus einem Werkzeugwechsler in die Frässpindel des Fräsaggregats 16 eingesetzt werden. Es können weitere Bearbeitungsschritte folgen wie das Setzen von Bohrungen bzw. Lochreihen-Bohrungen. Auch manuelle Tätigkeiten an einem Werkstück können erfolgen. Zur Automatisierung können mehrere Portalstationen oder Roboter eingesetzt werden.

## Patentansprüche

1. Vorrichtung zur Bearbeitung von Werkstücken (8), mit wenigstens einer Bearbeitungseinheit (16, 18, 3a, 3b) zur Bearbeitung eines Werkstücks (8), wobei wenigstens eine Fixiereinrichtung (10) zur Fixierung des Werkstücks (8) vorgesehen ist, welche entlang einer ersten Transportrichtung (X) in einer ersten Transportebene (5) bewegbar ist, wobei jede Fixiereinrichtung (10) so gelagert ist, dass sie aus der ersten Transportebene (5) in wenigstens eine weitere Transportebene (6) verlagerbar ist, innerhalb derer die Fixereinrichtung (10) in einer zweiten Transportrichtung (c) beweglich ist, und/oder dass sie innerhalb einer Transportebene (5) in wenigstens einer weiteren Transportrichtung beweglich ist,
**dadurch gekennzeichnet,**
**dass** die Fixiereinrichtung (10) eine drehbare Werkstückauflage aufweist, um das an der Fixiereinrichtung (10) fixierte Werkstück (8) drehen zu können.

2. Vorrichtung nach Anspruch 1,
**dadurch gekennzeichnet,**
**dass** die zweite Transportrichtung (c) im Wesentlichen parallel zur ersten Transportrichtung (X) verläuft.

3. Vorrichtung nach einem der vorherigen Ansprüche,
**dadurch gekennzeichnet,**
**dass** wenigstens Bearbeitungseinheit (16, 18, 3a, 3b) in der ersten oder/und der zweiten Transportebene (5, 6) vorgesehen ist.

4. Vorrichtung nach einem der vorherigen Ansprüche,
**dadurch gekennzeichnet,**
**dass** eine Werkstückaufnahmeeinrichtung zum Aufnehmen und Positionieren eines Werkstücks (8) auf einer Fixiereinrichtung (10) vorgesehen ist.

5. Vorrichtung nach einem der vorherigen Ansprüche,
**dadurch gekennzeichnet,**
**dass** die Fixiereinrichtungen (10) zyklisch oder im Durchlauf durch die erste und zweite Transportebene (5, 6) geführt werden können.

6. Vorrichtung nach einem der Ansprüche 3 bis 5,
**dadurch gekennzeichnet,**
**dass** es sich bei der wenigstens einen Bearbeitungseinheit (2, 16-19, 3a, 3b) um eine Bekantungseinheit (3a, 3b) oder eine Fräseinheit (2, 16-19) handelt.

## Claims

1. Device for processing workpieces (8), with at least one processing unit (16, 18, 3a, 3b) for processing a workpiece (8) wherein at least one fixing device (10) is provided for fixing the workpiece (8), which (fixing device) is movable along a first transport direction (X) in a first transport plane (5) wherein each fixing device (10) is mounted so that it can be moved from the first transport plane (5) into at least one further transport plane (6) inside which the fixing device (10) is movable in a second transport direction (c), and/or that it is movable inside a transport plane (5) in at least a further transport direction, **characterised in that** the fixing device (10) has a rotatable workpiece support in order to be able to rotate the workpiece (8) which is fixed on the fixing device (10).

2. Device according to claim 1 **characterised in that** the second transport direction (c) runs substantially parallel to the first transport direction (X).

3. Device according to one of the preceding claims **characterised in that** at least one processing unit (16, 18, 3a, 3b) is provided in the first or/and the second transport plane (5,6).

4. Device according to one of the preceding claims **characterised in that** a workpiece receiving device is provided for receiving and positioning a workpiece (8) on a fixing device (10).

5. Device according to one of the preceding claims **characterised in that** the fixing devices (10) can be guided cyclically or continuously through the first and second transport planes (5, 6).

6. Device according to one of claims 3 to 5 **characterised in that** the at least one processing unit (2, 16-19, 3a, 3b) is an edging unit (3a, 3b) or a milling unit (2, 16-19).

## Revendications

1. Dispositif destiné à usiner des pièces à traiter (8), qui comprend au moins une unité de traitement (16, 18, 3a, 3b) pour l'usinage d'une pièces à traiter (8), sachant que, pour la fixation de la pièces à traiter (8), est prévu au moins un dispositif de fixation (10), qui peut être déplacé le long d'une première direction de transport (X), sur un premier plan de transport (5), sachant que chaque dispositif de fixation (10) est monté de sorte qu'il puisse être transposé du premier plan de transport (5) dans au moins un autre plan de transport (6), dans lequel le dispositif de fixation (10) est mobile dans une deuxième direction de transport (c) et / ou que, dans un plan de transport (5), il est mobile dans au moins une autre direction de transport,
**caractérisé en ce que**
le dispositif de fixation (10) présente un support de pièce à traiter, autour duquel ladite pièce à traiter (8), fixée au dispositif de fixation (10), peut tourner.

2. Dispositif selon la revendication 1, **caractérisé en ce que** la deuxième direction de transport (c) s'étend parallèlement par rapport à la première direction de transport (X).

3. Dispositif selon revendication 1 ou 2, **caractérisé en ce qu'**au moins une unité de traitement (16, 18, 3a, 3b) est prévue dans le premier / et / ou dans le deuxième plan de transport (5, 6).

4. Dispositif selon l'une des revendications précédentes, **caractérisé en ce qu'**un dispositif de réception est prévu pour la prise en charge et le positionnement d'une pièce à traiter (8) sur le dispositif de fixation (10).

5. Dispositif selon l'une des revendications précédentes, **caractérisé en ce que** les dispositifs de fixation (10) peuvent être conduits par cycle ou en passage continu à travers le premier et le deuxième plans de transport (5, 6).

6. Dispositif selon l'une des revendications 3 à 5, **caractérisé en ce que** l'unité de traitement (2, 16 à 19, 3a, 3b) au moins prévue est une unité de bordage de chants (3a, 3b) ou une unité de fraisage (2, 16 à 19).
